# EUROPEAN PATENT SPECIFICATION

(11) **EP 1 749 346 B1**
(45) Date of publication and mention of the grant of the patent: **11.07.2012**
(21) Application number: 04822172.5
(22) Date of filing: 21.10.2004
(51) Int. Cl.: H04B 1/38, H04M 1/725

(54) **A LOW COST METHOD FOR RECEIVING BROADCAST CHANNELS WITH A CELLULAR TERMINAL**
KOSTENGÜNSTIGES VERFAHREN ZUM EMPFANGEN VON AUSGESTRAHLTEN KANÄLEN MIT EINEM ZELLULAREN ENDGERÄT
PROCEDE ECONOMIQUE DE RECEPTION DE CANAUX DE DIFFUSION AVEC UN TERMINAL CELLULAIRE

(30) Priority: 18.05.2004 US 848329
(43) Date of publication of application: 07.02.2007
(73) Proprietor: Sony Ericsson Mobile Communications AB, 221 83 Lund (SE)
(72) Inventor: SANDERS, Stuart, B., Cary, NC 27519 (US); EAST, Allen, M., Cary, NC 27511 (US)
(74) Representative: HOFFMANN EITLE
(86) International application number: PCT/US2004/034912
(87) International publication number: WO 2005/119925

(56) References cited:
- DE-A- 19 919 362
- US-A- 5 280 636
- US-A- 5 890 071

## Description

### BACKGROUND OF THE INVENTION

The present invention generally relates to wireless communication devices, and particularly relates to receiving broadcast signals in such devices, such as broadcast radio and television signals.

Consumer expectations of ever-increasing performance and convenience coupled with simultaneous expectations of ever decreasing size and cost establish significant challenges for designers of portable devices. Nowhere are such pressures felt more keenly than in the arena of wireless communication device design.

Functional lines blur and product categories stretch with the continuous introduction of new portable wireless devices that merge multiple functions. Ready examples of such merged products come easily to mind. Personal Information Managers (PIMS) includes cellular radiotelephones or vice versa, handheld computers include wireless network and cellular radio interfaces, mobile terminals include cameras, and the list goes on.

Wireless communication devices that include AM/FM radios represent one seemingly natural merger of product types. Consumers might be expected to appreciate the ability to listen to the radio while not using their wireless devices for other purposes. Indeed, the more functions provided by a single device, the less other devices are needed and the more that single device becomes integrated into everyday lifestyle. Unfortunately, the integration of such secondary functions into a device that already faces tremendous constraints on cost, size, battery life, and time to market, may make already challenging design goals impossible to meet.
Patent application DE 199 19 362 A, published 2 November 2000, discloses a communications terminal that provides for transmitting and receiving communications information and in which a television receiver and/or broadcast receiver is integrated.
U.S. patent application No. 5,280,636, issued 18 January 1994, discloses a multi-service digital receiver made possible with a single analogue-to-digital converter by translating the various service bands in frequency to form a single, generally continuous composite service band in which substantial frequency gaps between the different services are eliminated.

### SUMMARY OF THE INVENTION

The present invention is defined by the features of claim 1 and claim 9, respectively. Advantageous embodiments of the present invention are given in the dependent claims.

The present invention comprises a method and apparatus wherein a wireless communication terminal includes a broadcast signal frequency converter that is communicatively coupled to the terminal's communication signal receiver, and is configured to use its communication receiver to process received broadcast signals. An exemplary broadcast signal frequency converter includes a frequency shifting circuit to shift broadcast frequency bands into communication signal frequency bands compatible with the communication receiver's signal path. Thus shifted, the broadcast signals are sampled and processed using the digital domain signal processing capability of the communication receiver.

As such, the terminal's communication receiver can be used to receive broadcast radio and television signals, such as FM, AM, weather band, etc. , provide signal reception enhancements, and extract other types of information from received broadcast signals such as RDBS, IBOC, sideband signaling, etc. Further, the terminal can be configured to maintain communication network monitoring while receiving broadcast signals by switching the receiver back to a communication network signal long enough to check for incoming calls, messages, etc.

An exemplary wireless communication terminal according to one or more embodiments of the present invention therefore comprises a cellular receiver and a broadcast signal frequency converter coupled to the cellular receiver. The terminal is configured to receive and process wireless communication signals in one or more communication signal frequency bands via the cellular receiver. Further, it is configured to receive broadcast signals, e. g., radio, tv, etc. , in one or more broadcast frequency bands via the broadcast signal frequency converter, shift received broadcast signals into one of the communication signal frequency bands, and process the shifted broadcast frequency signals via the cellular receiver. Such a configuration puts the cellular receiver to the dual use of processing broadcast signals and communication signals, which greatly reduces the circuitry needed to add broadcast signal reception to the terminal's capabilities, as well as providing high quality broadcast signal processing and exemplary output of broadcast signal information. For example, the terminal can provide local audio output of received radio broadcasts, can display station/song information on its display, or can provide a received tv signal output on its display.

Similarly, an exemplary method according to one or more embodiments of the present invention comprises receiving broadcast signals in a wireless communication terminal based on frequency shifting a received broadcast signal into a frequency band compatible with a communication signal receive path of the terminal to obtain a shifted signal. The terminal then processes the shifted signal via the communication signal receive path. An exemplary terminal comprises a cellular radiotelephone that shifts received broadcast signals into a frequency band compatible with its communication signal receive path by block converting a broadcast frequency band into a cellular radio band. Simply put, received signals in a broadcast frequency band are shifted into a cellular radio band.

Of course, the present invention includes additional aspects, some of which are set forth in the following detailed discussion. Other features and advantages will be apparent to those skilled in the art upon reading the below discussion and upon viewing the accompanying illustration.

### BRIEF DESCRIPTION OF THE DRAWINGS

Fig. 1 is a diagram of an exemplary wireless communication device configured according to one or more embodiments of the present invention.
Fig. 2 is a diagram of an exemplary broadcast signal frequency converter.
Fig. 3 is a diagram of exemplary processing logic associated with receiving and processing broadcast signals and wireless communication signals.
Fig. 4 is a diagram of an exemplary circuit that integrates a broadcast signal frequency converter into a communication receiver circuit.

### DETAILED DESCRIPTION OF THE INVENTION

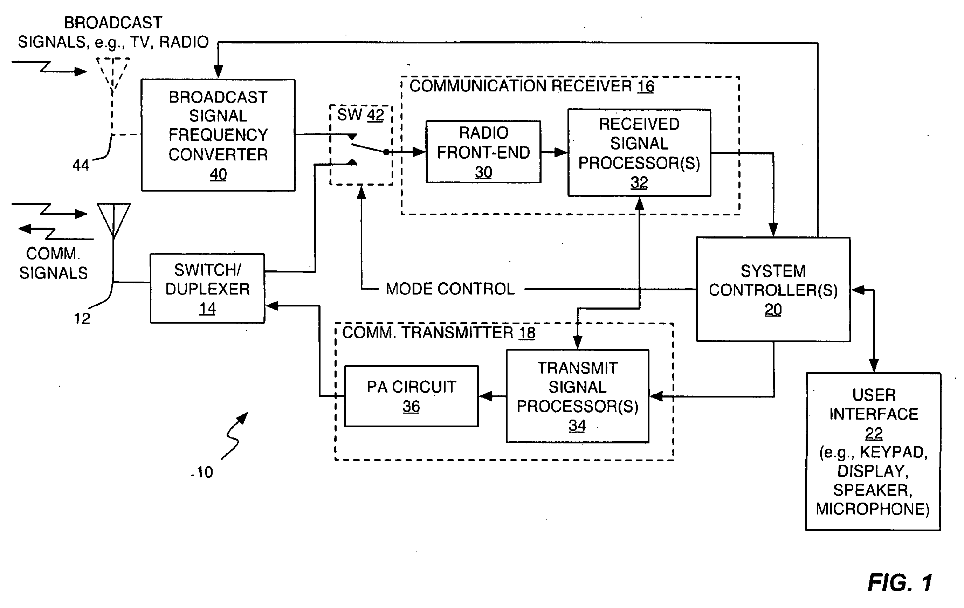

Fig. 1 is a diagram of an exemplary wireless communication device 10 that is configured according to an exemplary embodiment of the present invention. Device 10, which also is referred to as a "terminal" herein, may comprise a cellular radiotelephone, a wireless Personal Information Manager (PIM), a wireless handheld computer, or other type of wireless device.

With the above in mind, then, the exemplary device 10 comprises an antenna 12, a switch/duplexer 14, a communication receiver 16, a communication transmitter 18, one or more system controllers 20, e.g., one or more microcontrollers or other digital processing logic, and a user interface 22 that may include one or more of the following: a keypad for data, command, and dialing input, a display for providing information to a user, a microphone for receiving voice and other audio input to the user, and a speaker for outputting audio signals to the user.

Continuing on with the illustrated circuit elements, the exemplary communication receiver 16 comprises a radio front-end 30 and one or more received signal processors 32, which may be broadly understood as comprising hardware, software, or a desired mix thereof, that provide digital signal processing for digital signal samples output by the radio front-end 30. In an exemplary embodiment, processors 32 are configured to implement signal demodulation, decoding, equalization, etc. as needed in dependence on communication signal formats and desired performance characteristics. Possible communication signal formats include but are not limited to wireless communication standards such as IS-95B/IS-2000 Code Division Multiple Access (CDMA), Wideband CDMA, or GSM/PCS (in its various frequency bands).

The exemplary communication transmitter 18 similarly may be implemented in hardware, software, or some combination thereof, and comprises one or more transmit signal processors 34 and a transmitter amplifier circuit 36 (e.g., a power amplifier circuit). Those skilled in the art will appreciate that either or both the received signal processor(s) 32 and transmit signal processor(s) 34 may be integrated into or otherwise considered part of a baseband processor circuit, which may be an ASIC, a DSP, a microcontroller, or any combination thereof.

In any case, it should be understood that the above details can be varied and that an actual terminal 10 may include elements not explicitly illustrated, such as one or more memory devices or other data storage elements, and may omit some elements that are illustrated. Such variations are not material to understanding the exemplary usage and configuration of communication receiver 16 to process broadcast signals, such as broadcast radio and tv signals, in addition to its expected processing of wireless communication signals. To that end, the exemplary terminal 10 further comprises a broadcast signal frequency converter 40, an optional coupling element 42 (e.g., a RF switch), and an optional additional antenna 44.

In exemplary operation, the terminal 10 is configured to operate in either a first mode wherein it receives and processes incoming communication signals from a wireless communication network, or in a second mode wherein it receives and processes incoming broadcast signals. When reception and processing of incoming wireless communication signals is desired (or required), terminal 10 couples incoming communication signals received on antenna 12 to a received signal input of the communication receiver 16 via switch/duplexer 14 and switch 42. In that mode, the communication receiver 16 is configured to carry out digital signal processing within its receiver path that is appropriate for the type of communication signal being received.

Conversely, when reception of broadcast signals is desired, terminal 10 couples a signal output of broadcast signal frequency converter 40 through switch 42 to the receiver input of communication receiver 16. By this action, received broadcast signals are provided as analog input signals to the communication receiver 16 for digitization and appropriate signal processing in the digital domain. Of course, it will be recognized that the digital signal processing applied to broadcast signals generally will be different from that applied to incoming communication signals, which may be in complex digital modulation formats, and which may require sophisticated equalization or other interference cancellation, decoding, etc.

On that point, such changes in processing are handled easily by the exemplary receiver based on, for example, executing different signal processing programs at different times, reconfiguring programmable signal processing circuits, etc. Essentially, broadcast signal processing is carried out for no added cost within the eminently capable signal processing circuits of the communication signal processor. Indeed, with the computational "horsepower" of even the average terminal's digital signal processing circuits, broadcast signal processing can be made significantly more sophisticated than would be feasible in a conventional broadcast radio/tv receiver. For example, stereo reception, sophisticated filtering, equalization, etc., all may be implemented using the communication receiver's innate processing capabilities.

Of particular interest, the built-in signal processing capabilities of the communication receiver 16 may be used to extract other types of signal information from received broadcast signals in addition to, or as an alternative to, the expected audio or video signal information. That is, in addition to extracting audio or video signal information from tv, FM, AM, weather band, and other broadcasts, the signal processing capabilities of the communication receiver 16 can be used to extract non-audio information, such as Radio Data Broadcast System (RDBS) information, In Band On Channel (IBOC) information, or other signaling information (such as sideband signaling components).

The extracted non-audio information may be stored in the terminal, displayed to the user, or both, or used in some other aspect of the terminal's operation. Indeed, as terrestrial digital radio broadcasting comes into its own, the ability to receive and process digital content included in broadcast signals represents a significant alternative or supplemental mechanism for providing data to portable device users.

Regardless, in returning to exemplary details associated with operating the terminal 10, it should be noted that terminal 10 may be configured for communication signal processing as a default mode, and may be configured to, switch to broadcast signal processing responsive to user input, for example. As such, terminal 10 may provide its user with a simulated radio and/or tv control interface via its display and/or keypad, and tune in selected broadcast signal bands and particular radio and tv stations responsive to user input. As will be explained later herein, even when terminal 10 is placed in a broadcast signal mode, it is not cut off from a supporting wireless communication network (not illustrated) as it may be configured to periodically switch its communication receiver 16 from processing the incoming broadcast signals to processing incoming network communication signals long enough to check for incoming calls, messages, other paging signals, etc.

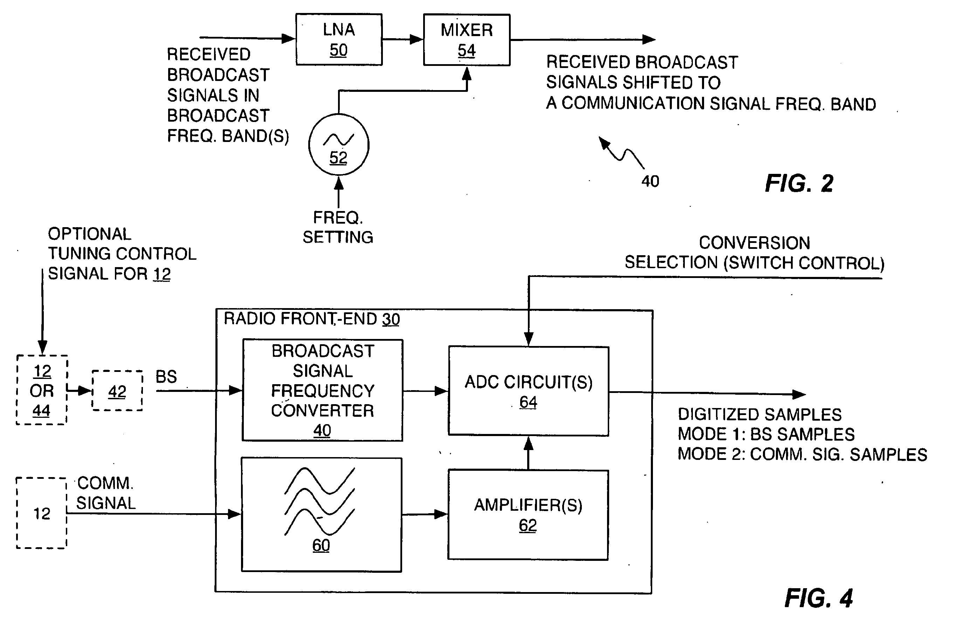

Fig. 2 illustrates exemplary details for the broadcast signal frequency converter 40. In the illustrated embodiment, converter 40 comprises a low-noise amplifier (LNA) 50 and a frequency shifting circuit that includes or is associated with an oscillator 52 and a mixer 54. LNA 50, which may comprise a tunable circuit responsive to system controller 20, for example, provides a low-level signal corresponding to a desired broadcast signal frequency. That signal is then frequency shifted by mixer 54 into a communication signal band such that the shifted signal is frequency compatible with the received signal-processing path of the communication receiver 16. Indeed, by shifting received broadcast signals into a communication signal frequency band that is "native" to the communication receiver 16, the various sampling (digitization), filtering, and other fundamental signal processing operations carried out by the communication receiver 16 are compatible.

Such frequency compatibility yields at least the two-fold advantage of not requiring changing clock signals, filters, etc., in the receiver chain, which keeps cost and complexity low, and keeping the communication receiver 16 within its native frequency band(s) keeps it ready for rapid, temporary switchovers to communication signal monitoring. Such switchovers permit the terminal 10 to periodically check for pages, stay registered in a supporting wireless network, etc., during periods of broadcast signal reception without causing undue interruptions in the reception of that broadcast.

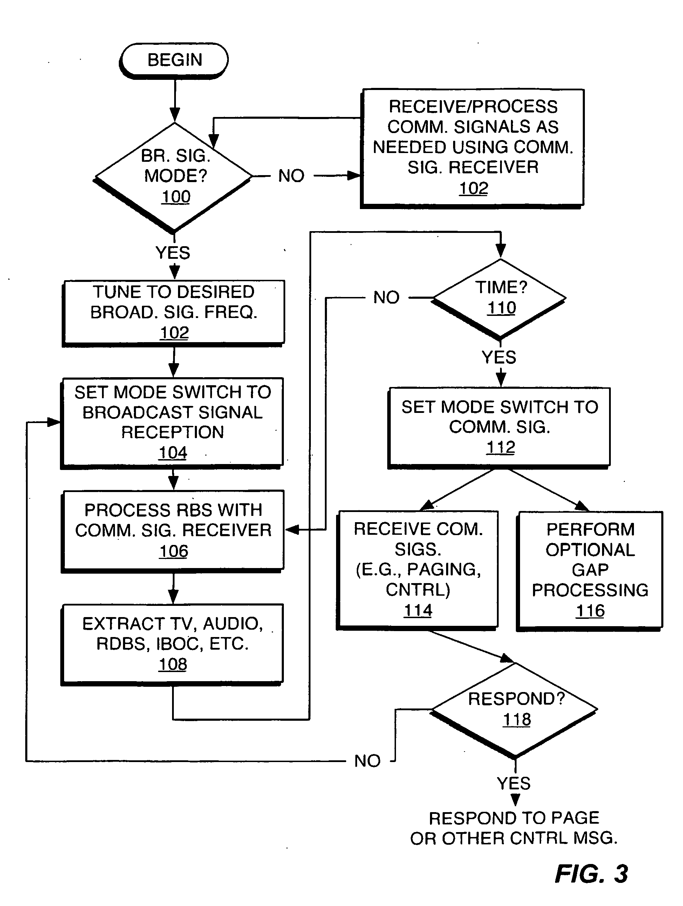

In looking at switch-over operation in the context of an exemplary processing logic flow that can be carried out by terminal 10, Fig. 3 illustrates that processing "begins" with a determination of whether broadcast signal mode operation is desired (Step 100). Such a desire might be indicated by user input, for example. If broadcast signal reception is not desired, terminal 10 carries on with receiving and processing (and transmitting) wireless communication signals as needed or desired (Step 102).

If broadcast signal reception is desired, terminal 10 "tunes" to the desired broadcast signal frequency, which might be selected by the user according to "favorite" station presets accessed through the user interface 22, for example. Terminal 10 couples the broadcast signal frequency converter 40 to communication receiver 16 by actuating switch 42 (or by some other connection means as needed or desired). Since switch 42 as shown in Fig. 1 sets the receiving mode to communication signal or broadcast signal reception, switch 42 may be referred to as a "mode" switch. However, other circuit arrangements can be used to put communication receiver circuit 16 to the dual use of receiving either broadcast signals or wireless communication signals.

With the frequency-shifted analog output signal from converter 40 now coupled to the communication receiver's input, that shifted signal is sampled (digitized) and the sampled waveform is processed in the digital domain by communication receiver 16 as needed or desired (Step 106). Any audio information extracted from the waveform samples can be output by terminal 10 using a built-in speaker, provided to the user on a headphone output, or retained in digital format for storage in memory in anticipation of later playback, etc. Similarly, the terminal's display may be used for viewing received tv broadcasts (Step 108).

Similarly, any non-audio information included in the received broadcast data signals, e.g, RDBS, IBOC, or other information, can be extracted in the digital domain and output to the user in the appropriate format and/or stored for later use (Step 108). By way of non-limiting examples, the terminal 10 may process RDBS information to provide the user with received broadcast station identifications, current song titles, upcoming play lists, etc., while IBOC information can be used for the same purpose or for receiving news services, stock quotes, etc.

While such processing is ongoing, the exemplary terminal 10 can be configured to stay in contact with its supporting wireless communication network. As such, it may run a timer or use some other timing mechanism to control a periodic monitoring switch-over to its supporting wireless communication network. If the timing interval has expired (Step 110), e.g., a half-second monitoring interval, the terminal temporarily switches communication receiver 16 from receiving and processing incoming broadcast signals to receiving and processing incoming wireless communication signals from the network (Step 112).

Thus switched over, the terminal 10 receives a paging channel signal (or other overhead/control channel signal) long enough to determine whether the terminal 10 is being paged, or otherwise has a pending call, message, or other network-related event pending (Step 114). If necessary, terminal 10 can break out of or otherwise suspend broadcast signal reception in favor of carrying out communication network operations, such as responding to paging, answering incoming calls, receiving Short Messaging Service (SMS) messages, Multimedia Messaging Services (MMS) messages, etc.

Further, during its switch-over time, the exemplary terminal 10 can be configured to perform optional gap processing (Step 116), wherein the terminal 10 uses its signal processing capability to generate signal information used to fill reception gaps in the incoming broadcast signal caused by the terminal's temporary switchover to the wireless network. While such gaps typically should be brief, e.g., less than 20 ms, they nevertheless may be noticeable in any signals being generated from the received broadcast signal.

For example, any one of know signal processing algorithms can be implemented by terminal 10 to "continue" audio or video play through the gaps based on generating local gap filling signal information (Step 116). Such algorithms may be quite simple, e.g., repeating a last sample through the gap, or more sophisticated, e.g., synthesizing samples by signal modeling. Gap filling also may be used for any non-audio information that is interrupted by monitoring switchovers. However, in the case of non-audio information, gap-filing processes may take advantage of any error encoding or other forward error correction information that may be used in transmitting the non-audio information.

Regardless, if the terminal 10 determines that its appropriate to return from its switchover (Step 118), it sets the mode switch 42 back to the broadcast signal mode (Step 104). From there, processing repeats as described above.

Turning from exemplary processing logic to exemplary functional implementations of terminal 10, Fig. 4 illustrates an embodiment wherein the broadcast signal frequency converter 40 is integrated into the radio front-end 30 of the communication receiver. It should be understood that such integration is not required but may offer one or more advantages. For example, communication receiver front-ends typically must meet exacting performance requirements and, as such, are well suited for implementing the LNA 50 included in broadcast signal frequency converter 40. Further, other elements, such as the oscillator 52 already may be available in the communication receiver 16. Additionally, the underlying fabrication process technologies, e. g., Silicon Germanium (SiGe) commonly.used for radio front-end 30, are compatible with the needs of broadcast signal frequency converter 40.

Fig. 4 further illustrates just a few of the several antenna options contemplated by the present invention. Broadcast signal frequency converter 40 may have its own antenna 44 (as shown in Fig. 1), or may use the same antenna 12 as used for transmitting and receiving wireless communication signals. Terminal 10 optionally may be configured with a tunable antenna 12 such that its nominal frequency range is adjusted for broadcast signal mode and for communication network mode. However, it is expected that antenna 12 can be used for both modes without any such tuning.

Of course, whether or not antenna tuning is used is a matter of design preference depending on the needs arising in a particular terminal's design. It should be understood that in these and other matters the present invention's implementation details may be varied significantly without departing from its scope. Nor are the above exemplary details limiting with regard to the present invention. Indeed, the present invention is limited only by the following claims.

## Claims

1. A wireless communication terminal (10) comprising a cellular receiver (16) and configured to receive and process wireless communication signals in one or more cellular wireless communication signal frequency bands via the cellular receiver (16), **characterized in that** the wireless communication terminal (10) further comprises a broadcast signal frequency converter (40) coupled to the cellular receiver (16) and **in that** the terminal (10) is configured to receive broadcast signals in one or more broadcast frequency bands and to shift the received broadcast signals into one of the communication signal frequency bands via the broadcast signal frequency converter (40), and to process the shifted broadcast signals via the cellular receiver (16).

2. The terminal of claim 1, further **characterized in that** the terminal (10) comprises one or more processing circuits (20) operatively associated with the cellular receiver (16) and configured to switch the cellular receiver (16) between processing the communication signals and processing the shifted broadcast signals.

3. The terminal of claim 1, further **characterized in that** the terminal (10) is configured to generate at least one of an audio signal and a video signal responsive to digitizing and processing the shifted broadcast signals.

4. The terminal of claim 1, further **characterized in that** the terminal (10) is configured to perform signal enhancement for the received broadcast signals via digital signal processing in the cellular receiver (16).

5. The terminal of claim 1, further **characterized in that** the terminal (10) is configured to extract non-audio signal information from the received broadcast signals via digital signal processing performed in the cellular receiver (16).

6. The terminal of claim 5, further **characterized in that** the terminal (10) is configured to extract non-audio information as one or more of Radio Data Broadcast System (RDBS) information and In Band On Channel (IBOC) information.

7. The terminal of claim 1, further **characterized in that** the terminal (10) is configured to continue monitoring transmissions from a wireless communication network while receiving and processing the received broadcast signals based on periodically temporarily switching the cellular receiver (16) from processing incoming broadcast signals to processing incoming wireless communication signals.

8. The terminal of claim 7, further **characterized in that** the terminal (10) is configured to generate signal information locally to fill broadcast signal reception gaps caused by periodically temporarily switching the cellular receiver (16) from processing the incoming broadcast signals to processing the incoming wireless communication signals.

9. A method of receiving broadcast signals in a wireless communication terminal (10), **characterized by**:
frequency shifting a received broadcast signal from one broadcast frequency band into a cellular wireless communication frequency band compatible with a communication signal receive path (16) of the terminal (10) to obtain a shifted signal; and
processing the shifted signal via the communication signal receive path (16).

10. The method of claim 9, wherein the terminal (10) comprises a cellular radio terminal, and further **characterized in that** frequency shifting a received broadcast signal into a frequency band compatible with a communication signal receive path (16) of the terminal (10) comprises block converting a broadcast signal frequency band into a cellular radio band such that received signals in the broadcast signal frequency band are shifted into the cellular radio band.

11. The method of claim 9, further **characterized in that** frequency shifting a received broadcast signal into a frequency band compatible with a communication signal receive path (16) of the terminal (10) comprises frequency shifting one or more of the following types of broadcast signals: television, FM radio, AM radio, and short wave radio.

12. The method of claim 9, further **characterized in that** processing the shifted signal via the communication signal receive path (16) comprises inputting the shifted signal into a radio front-end (30) of the communication signal receive path (16) to obtain corresponding digital samples of the shifted signal, and processing the digital samples to recover any analog and digital information conveyed by the received broadcast signal.

13. The method of claim 12, wherein the received broadcast signal conveys an analog audio signal, and further **characterized in that** processing the digital samples to recover any analog and digital information conveyed by the received broadcast signal comprises processing the digital samples to recover the analog audio signal for audio output at the terminal (10).

14. The method of claim 12, wherein the received broadcast signal conveys digital data, and further **characterized in that** processing the digital samples to recover any analog and digital information conveyed by the received broadcast signal comprises processing the digital samples to recover the digital data for further processing by the terminal (10).

15. The method of claim 14, further **characterized in that** further processing of the recovered digital data by the terminal (10) includes displaying information related to the recovered digital data on a display screen (22) of the terminal (10).

16. The method of claim 14, further **characterized in that** further processing of the recovered digital data by the terminal (10) includes generating an analog audio output signal from the recovered digital data for output at the terminal (10).

17. The method of claim 12, wherein the received broadcast signal comprises a broadcast television signal, and further **characterized in that** processing the digital samples to recover any analog and digital information conveyed by the received broadcast signal comprises processing the digital samples to recover an analog television signal for display at the terminal (10).

18. The method of claim 9, wherein the received broadcast signal comprises a FM radio signal, and further **characterized in that** processing the shifted signal via the cellular receive path (16) comprises sampling the shifted signal to obtain digital samples and processing the digital samples to recover analog signal information conveyed in the received FM radio signal.

19. The method of claim 18, further **characterized by** processing the digital samples to recover Radio Data Broadcast Signal information conveyed in the received FM radio signal.

20. The method of claim 9, wherein the received broadcast signal comprises an In Band On Channel (IBOC) signal, and further **characterized in that** processing the shifted signal via the cellular receive path (16) comprises digitizing the shifted signal to obtain digital samples, and processing the digital samples to recover IBOC data.

21. The method of claim 9, further **characterized by** interrupting reception of the broadcast signal as needed to communicate with a cellular network.

22. The method of claim 21, further **characterized in that** interrupting reception of the broadcast signal as needed to communicate with a cellular network comprises periodically interrupting reception of the broadcast signal to monitor transmissions from the cellular network.

23. The method of claim 9, further **characterized by** generating signal information to fill signal gaps resulting from the interruptions in reception of the broadcast signal.

## Patentansprüche

1. Funkkommunikations-Endgerät (10), umfassend einen Zellempfänger (16), und dafür konfiguriert, Funkkommunikationssignale in einem oder mehreren zellulären Funkkommunikationssignal-Frequenzbändern über den Zellempfänger (16) zu empfangen und zu verarbeiten, **dadurch gekennzeichnet, dass** das Funkkommunikations-Endgerät (10) weiter umfasst einen Rundfunksignalfrequenzwandler (40), der mit dem Zellempfänger (16) gekoppelt ist, und dadurch, dass das Endgerät (10) konfiguriert ist, Rundfunksignale in einem oder mehreren Rundfunkfrequenzbändern zu empfangen und die empfangenen Rundfunksignale über den Rundfunksignalfrequenzwandler (40) in eines der Kommunikationssignalfrequenzbänder zu verschieben und die verschobenen Rundfunksignale über den Zellempfänger (16) zu verarbeiten.

2. Endgerät nach Anspruch 1, weiter **dadurch gekennzeichnet, dass** das Endgerät (10) eine oder mehrere Verarbeitungsschaltungen (20) umfasst, die betrieblich mit dem Zellempfänger (16) assoziiert sind und konfiguriert sind, den Zellempfänger (16) zwischen der Verarbeitung der Kommunikationssignale und der Verarbeitung der verschobenen Rundfunksignale umzuschalten.

3. Endgerät nach Anspruch 1, weiter **dadurch gekennzeichnet, dass** das Endgerät (10) konfiguriert ist, ein Audiosignal oder/und ein Videosignal responsiv auf die Digitalisierung und Verarbeitung der verschobenen Rundfunksignale zu erzeugen.

4. Endgerät nach Anspruch 1, weiter **dadurch gekennzeichnet, dass** das Endgerät (10) konfiguriert ist, eine Signalverstärkung für die empfangenen Rundfunksignale über die Digitalsignalverarbeitung im Zellempfänger (16) durchzuführen.

5. Endgerät nach Anspruch 1, weiter **dadurch gekennzeichnet, dass** das Endgerät (10) konfiguriert ist, Nicht-Audio-Signalinformation aus den empfangenen Rundfunksignalen über eine im Zellempfänger (16) durchgeführte Digitalsignalverarbeitung zu extrahieren.

6. Endgerät nach Anspruch 5, weiterhin **dadurch gekennzeichnet, dass** das Endgerät (10) konfiguriert ist, Nicht-Audioinformationen als "Radio Data Broadcast System"- (RDBS) Informationen und/oder "In Band On Channel"- (IBOC) Informationen zu extrahieren.

7. Endgerät nach Anspruch 1, weiter **dadurch gekennzeichnet, dass** das Endgerät (10) konfiguriert ist, das Überwachen von Übertragungen aus einem Funkkommunikationsnetzwerk fortzusetzen, während die empfangenen Rundfunksignale empfangen und verarbeitet werden, basierend auf periodischem, zeitweiligen Umschalten des Zellempfängers (16) von der Verarbeitung eingehender Rundfunksignale zur Verarbeitung eingehender Funkkommunikationssignale.

8. Endgerät nach Anspruch 7, weiter **dadurch gekennzeichnet, dass** das Endgerät (10) konfiguriert ist, Signalinformation lokal zu erzeugen, um Rundfunksignalempfangslücken aufzufüllen, die durch das periodische, zeitweilige Umschalten des Zellempfängers (16) von der Verarbeitung eingehender Rundfunksignale zur Verarbeitung eingehender Funkkommunikationssignale verursacht werden.

9. Verfahren zum Empfangen von Rundfunksignalen in einem Funkkommunikations-Endgerät (10), **gekennzeichnet durch**:
Frequenzverschieben eines empfangenen Rundfunksignals von einem Rundfunkfrequenzband in ein zelluläres Funkkommunikationsfrequenzband, das mit einem Kommunikationssignalempfangspfad (16) des Endgerätes (10) kompatibel ist, um ein verschobenes Signal zu erhalten; und
Verarbeiten des verschobenen Signals über den Kommunikationssignalsempfangspfad (16).

10. Verfahren nach Anspruch 9, wobei das Endgerät (10) ein zelluläres Funkendgerät umfasst und weiter **dadurch gekennzeichnet ist, dass** eine Frequenzverschiebung eines empfangenen Rundfunksignals in ein Frequenzband, das mit einem Kommunikationssignalempfangspfad (16) des Endgerätes (10) kompatibel ist, eine Blockumwandlung eines Rundfunksignalfrequenzbands in ein zelluläres Funkband umfasst, so dass empfangene Signale im Rundfunksignalfrequenzband in das zelluläre Funkband verschoben werden.

11. Verfahren nach Anspruch 9, weiter **dadurch gekennzeichnet, dass** eine Frequenzverschiebung eines empfangenen Rundfunksignals in ein Frequenzband, das mit einem Kommunikationssignalempfangspfad (16) des Endgeräts (10) kompatibel ist, eine Frequenzverschiebung eines oder mehrerer der folgenden Typen von Rundfunksignalen umfasst: Fernsehen, Frequenzmodulations- (UKW) Radio, Amplitudenmodulations-(MW) Radio und Kurzwellenradio.

12. Verfahren nach Anspruch 9, weiterhin **dadurch gekennzeichnet, dass** die Verarbeitung des verschobenen Signals über den Kommunikationssignalsempfangspfad (16) die Eingabe des verschobenen Signals in einen Funkfrontendteil (30) des Kommunikationssignalsempfangspfads (16) umfasst, um entsprechende digitale Abtastwerte des verschobenen Signals zu erhalten, und Verarbeiten der digitalen Abtastwerte, um irgendeine analoge und digitale Information wiederzugewinnen, die durch das empfangene Rundfunksignal transportiert wird.

13. Verfahren nach Anspruch 12, wobei das empfangene Rundfunksignal ein analoges Audiosignal transportiert, und weiter **dadurch gekennzeichnet, dass** die Verarbeitung der digitalen Abtastwerte zum Wiedergewinnen jeglicher analoger und digitaler Information, die durch das empfangene Rundfunksignal transportiert wird, das Verarbeiten der digitalen Abtastwerte zum Wiederherstellen des analogen Audiosignals für die Audioausgabe am Endgerät (10) umfasst.

14. Verfahren nach Anspruch 12, wobei das empfangene Rundfunksignal Digitaldaten transportiert und weiter **dadurch gekennzeichnet ist, dass** die Verarbeitung der digitalen Abtastwerte zum Wiederherstellen jeglicher analoger und digitaler Information, die durch das empfangene Rundfunksignal transportiert wird, das Verarbeiten der digitalen Abtastwerte zum Wiederherstellen der Digitaldaten für die weitere Verarbeitung durch das Endgerät (10) umfasst.

15. Verfahren nach Anspruch 14, weiter **dadurch gekennzeichnet, dass** die weitere Verarbeitung der wiederhergestellten Digitaldaten durch das Endgerät (10) das Anzeigen von Informationen, die sich auf die wiederhergestellten Digitaldaten beziehen, auf dem Anzeigebildschirm (22) des Endgerätes (10) beinhaltet.

16. Verfahren nach Anspruch 14, weiter **dadurch gekennzeichnet, dass** die Verarbeitung der wiederhergestellten Digitaldaten durch das Endgerät (10) das Erzeugen eines analogen Audioausgabesignals aus den wiederhergestellten Digitaldaten zur Ausgabe am Endgerät (10) beinhaltet.

17. Verfahren nach Anspruch 12, wobei das empfangene Rundfunksignal ein Rundfunkfernsehsignal umfasst, und weiter **dadurch gekennzeichnet ist, dass** die Verarbeitung der digitalen Abtastwerte zur Wiederherstellung jeglicher analoger und digitaler Information, die vom empfangenen Rundfunksignal transportiert wird, das Verarbeiten der digitalen Abtastwerte zur Wiederherstellung eines analogen Fernsehsignals zur Anzeige am Endgerät (10) umfasst.

18. Verfahren nach Anspruch 9, wobei das empfangene Rundfunksignal ein Frequenzmodulationsradiosignal umfasst, und weiter **dadurch gekennzeichnet, dass** die Verarbeitung des verschobenen Signals über den zellulären Empfangspfad (16) das Abtasten des verschobenen Signals umfasst, um digitale Abtastwerte zu erhalten, und das Verarbeiten der digitalen Abtastwerte zum Wiederherstellen analoger Signalinformation, die durch das empfangene FM- (UKW)-Radiosignal transportiert wird.

19. Verfahren nach Anspruch 18, weiter **gekennzeichnet durch** das Verarbeiten der digitalen Abtastwerte zum Wiederherstellen von" Radio Data Broadcast Signal"-Informationen, die im empfangenen FM-Radiosignal transportiert sind.

20. Verfahren nach Anspruch 9, wobei das empfangene Rundfunksignal ein "In Band On Channel"- (IBOC) Signal umfasst, und weiter **dadurch gekennzeichnet, dass** die Verarbeitung des verschobenen Signals über den zellulären Empfangspfad (16) das Digitalisieren des verschobenen Signals zum Erhalten von digitalen Abtastwerten und das Verarbeiten der digitalen Abtastwerte zur Wiederherstellung von IBOC-Daten umfasst.

21. Verfahren nach Anspruch 9, weiter **gekennzeichnet durch** Unterbrechen des Empfangs des Rundfunksignals nach Bedarf, um mit einem zellulären Netzwerk zu kommunizieren.

22. Verfahren nach Anspruch 21, weiter **dadurch gekennzeichnet, dass** das Unterbrechen des Empfangs des Rundfunksignals nach Bedarf zum Kommunizieren mit dem zellulären Netzwerk das periodische Unterbrechen des Empfangs des Rundfunksignals zur Überwachung von Übertragungen aus dem zellulären Netzwerk umfasst.

23. Verfahren nach Anspruch 9, weiter **gekennzeichnet durch** das Erzeugen von Signalinformationen, um Signallücken zu füllen, die aus den Unterbrechungen beim Empfang des Rundfunksignals resultieren.

## Revendications

1. Terminal de communication sans fil (10) comprenant un récepteur cellulaire (16) et configuré pour recevoir et traiter des signaux de communication sans fil dans une ou plusieurs bandes de fréquences de signal de communication sans fil cellulaire par l'intermédiaire du récepteur cellulaire (16), **caractérisé en ce que** le terminal de communication sans fil (10) comprend en outre un convertisseur de fréquence de signal de diffusion (40) couplé au récepteur cellulaire (16) et **en ce que** le terminal (10) est configuré pour recevoir des signaux diffusés dans une ou plusieurs bandes de fréquences de diffusion et pour décaler les signaux de diffusion reçus dans une des bandes de fréquences de signal de communication par l'intermédiaire du convertisseur de fréquence de signal de diffusion (40), et pour traiter les signaux de diffusion décalés par l'intermédiaire du récepteur cellulaire (16).

2. Terminal selon la revendication 1, **caractérisé en outre en ce que** le terminal (10) comprend un ou plusieurs circuits de traitement (20) associés de manière opérationnelle au récepteur cellulaire (16) et configurés pour commuter le récepteur cellulaire (16) entre le traitement des signaux de communication et le traitement des signaux de diffusion décalés.

3. Terminal selon la revendication 1, **caractérisé en outre en ce que** le terminal (10) est configuré pour produire au moins l'un d'un signal audio et d'un signal vidéo en réponse à la numérisation et au traitement des signaux de diffusion décalés.

4. Terminal selon la revendication 1, **caractérisé en outre en ce que** le terminal (10) est configuré pour effectuer une amélioration de signal pour les signaux de diffusion reçus par l'intermédiaire d'un traitement de signal numérique dans le récepteur cellulaire (16).

5. Terminal selon la revendication 1, **caractérisé en outre en ce que** le terminal (10) est configuré pour extraire des informations de signal non audio à partir des signaux de diffusion reçus par l'intermédiaire du traitement de signal numérique effectué dans le récepteur cellulaire (16).

6. Terminal selon la revendication 5, **caractérisé en outre en ce que** le terminal (10) est configuré pour extraire des informations non audio en tant qu'une ou plusieurs informations de Système de Diffusion de Données Radio (RDBS) et d'informations intrabande sur le canal de réception (IBOC).

7. Terminal selon la revendication 1, **caractérisé en outre en ce que** le terminal (10) est configuré pour continuer à contrôler des émissions en provenance d'un réseau de communication sans fil tout en recevant et en traitant les signaux de diffusion reçus en se basant sur la commutation périodique temporaire du récepteur cellulaire (16) entre le traitement de signaux de diffusion entrants et le traitement de signaux de communication sans fil entrants.

8. Terminal selon la revendication 7, **caractérisé en outre en ce que** le terminal (10) est configuré pour produire des informations de signal localement pour remplir des espacements de réception de signal de diffusion provoqués par la commutation périodique temporaire du récepteur cellulaire (16) entre le traitement de signaux de diffusion entrants et le traitement de signaux de communication sans fil entrants.

9. Procédé de réception de signaux de diffusion dans un terminal de communication sans fil (10), **caractérisé par** :
le décalage de fréquence d'un signal de diffusion reçu d'une bande de fréquences de diffusion en une bande de fréquences de communication sans fil cellulaire compatible avec un chemin de réception de signal de communication (16) du terminal (10) pour obtenir un signal décalé ; et
le traitement du signal décalé par l'intermédiaire du chemin de réception de signal de communication (16).

10. Procédé selon la revendication 9, dans lequel le terminal (10) comprend un terminal radio cellulaire, et **caractérisé en outre en ce qu'**un décalage de fréquence d'un signal de diffusion reçu en une bande de fréquences compatible avec un chemin de réception de signal de communication (16) du terminal (10) comprend la transformation par bloc d'une bande de fréquences de signal de diffusion en une bande radio cellulaire de sorte que des signaux reçus dans la bande de fréquences de signal de diffusion sont décalés dans la bande radio cellulaire.

11. Procédé selon la revendication 9, **caractérisé en outre en ce qu'**un décalage de fréquence d'un signal de diffusion reçu en une bande de fréquences compatible avec un chemin de réception de signal de communication (16) du terminal (10) comprend un décalage de fréquence d'un ou plusieurs des types suivants de signaux de diffusion : télévision, radio FM, radio AM, et radio ondes courtes.

12. Procédé selon la revendication 9, **caractérisé en outre en ce qu'**un traitement du signal décalé par l'intermédiaire du chemin de réception de signal (16) comprend l'entrée du signal décalé dans une extrémité frontale radio (30) du chemin de réception de signal de communication (16) pour obtenir des échantillons numériques correspondants du signal décalé, et le traitement des échantillons numériques pour récupérer n'importe quelles informations analogiques et numériques transportées par le signal de diffusion reçu.

13. Procédé selon la revendication 12, dans lequel le signal de diffusion reçu transporte un signal audio analogique, et **caractérisé en outre en ce qu'**un traitement des échantillons numériques pour récupérer n'importe quelles informations analogiques et numériques transportées par le signal de diffusion reçu comprend un traitement des échantillons numériques pour récupérer le signal audio analogique pour une sortie audio au niveau du terminal (10).

14. Procédé selon la revendication 12, dans lequel le signal de diffusion reçu transporte des données numériques, et **caractérisé en outre en ce qu'**un traitement des échantillons numériques pour récupérer n'importe quelles informations analogiques et numériques transportées par le signal de diffusion reçu comprend un traitement des échantillons numériques pour récupérer les données numériques pour un traitement supplémentaire par le terminal (10).

15. Procédé selon la revendication 14, **caractérisé en outre en ce qu'**un traitement supplémentaire des données numériques récupérées par le terminal (10) inclut l'affichage d'informations liées aux données numériques récupérées sur un écran d'affichage (22) du terminal (10).

16. Procédé selon la revendication 14, **caractérisé en outre en ce qu'**un traitement supplémentaire des données numériques récupérées par le terminal (10) inclut la production d'un signal de sortie audio analogique à partir des données numériques récupérées pour sortie au niveau du terminal (10).

17. Procédé selon la revendication 12, dans lequel le signal de diffusion reçu comprend un signal de diffusion de télévision, et **caractérisé en outre en ce qu'**un traitement des échantillons numériques pour récupérer n'importe quelles informations analogiques et numériques transportées par le signal de diffusion reçu comprend un traitement des échantillons numériques pour récupérer un signal de télévision analogique pour affichage au niveau du terminal (10).

18. Procédé selon la revendication 9, dans lequel le signal de diffusion reçu comprend un signal radio FM, et **caractérisé en outre en ce qu'**un traitement du signal décalé par l'intermédiaire du chemin de réception cellulaire (16) comprend un échantillonnage du signal décalé pour obtenir des échantillons numériques et un traitement des échantillons numériques pour récupérer des informations de signal analogiques transportées dans le signal radio FM reçu.

19. Procédé selon la revendication 18, **caractérisé en outre par** un traitement des échantillons numériques pour récupérer des informations de Signal de Diffusion de Données Radio transportées dans le signal radio FM reçu.

20. Procédé selon la revendication 9, dans lequel le signal de diffusion reçu comprend un signal intrabande sur le canal de réception (IBOC), et **caractérisé en outre en ce qu'**un traitement du signal décalé par l'intermédiaire du chemin de réception cellulaire (16) comprend la numérisation du signal décalé pour obtenir des échantillons numériques et un traitement des échantillons numériques pour récupérer des données IBOC.

21. Procédé selon la revendication 9, **caractérisé en outre par** l'interruption de la réception du signal de diffusion lorsque cela est nécessaire pour communiquer avec un réseau cellulaire.

22. Procédé selon la revendication 21, **caractérisé en outre en ce que** l'interruption de la réception du signal de diffusion lorsque cela est nécessaire pour communiquer avec un réseau cellulaire comprend l'interruption périodique de la réception du signal de diffusion pour contrôler des émissions provenant du réseau cellulaire.

23. Procédé selon la revendication 9, **caractérisé en outre par** la production d'informations de signal pour remplir des espacements de signal résultant des interruptions dans la réception du signal de diffusion.
